# EUROPEAN PATENT APPLICATION

(11) **EP 1 900 548 A1**
(43) Date of publication of application: **19.03.2008**
(21) Application number: 07115834.9
(22) Date of filing: 06.09.2007
(51) Int. Cl.: B60C 1/00, C08K 3/04, C08K 3/36, C08K 9/12, C08L 9/00, C08L 21/00

(54) **Carbon black-rich rubber composition containing particulate hydrophylic water absorbing polymer and tire with tread thereof**

(30) Priority: 08.09.2006 US 517631
(71) Applicant: THE GOODYEAR TIRE & RUBBER COMPANY, Akron, OH 44316-0001 (US)
(72) Inventor: Zhang, Ping, Hudson, OH 44236 (US); Sandstrom, Paul Harry, Cuyahoga Falls, OH 44223 (US); Kulig, Joseph John, Tallmadge, OH 44278 (US); Futamura, Shingo, Wadsworth, OH 44281 (US); Bates, Kenneth Allen, Brunswick, OH 44212 (US); Hsu, Wen-Liang, Cuyahoga Falls, OH 44223 (US); Hua, Kuo-Chih, Richfield, OH 44286 (US)
(74) Representative: Kutsch, Bernd

(57) **Abstract**

This invention relates to a rubber composition which contains a dispersion of a particulate hydrophilic water absorbing polymer and tire with a tread thereof.

The water-absorbing polymer has the capability of absorbing water in an amount of at least 1 g/g and is preferably present at the surface of the rubber composition.

## Description

### Field of the Invention

This invention relates to a rubber composition which contains a dispersion of a particulate hydrophilic water absorbing polymer and tire with a tread thereof.

### Background and Summary of the Invention

Wet traction is often desirable for the running surface of a rubber tire tread.

Tire treads conventionally contain a running surface of a rubber composition which contains a reinforcing filler such as, for example, rubber reinforcing carbon black and/or precipitated silica.

Historically, rubber reinforcing carbon black has been a primary reinforcing filler for tire treads to provide acceptable resistance to treadwear and to promote dry traction, although promoting wet traction for the tire treads can often present a challenge for carbon black reinforced rubber compositions. In order to promote wet skid resistance (wet traction) for a tire tread rubber composition, precipitated silica might be used as a reinforcing filler, sometimes in combination with rubber reinforcing carbon black, together with a coupling agent for the silica.

However, as compared to use of rubber reinforcing carbon black filler, inclusion of the silica reinforcing filler typically requires extended sequential rubber mixing stages and rubber mixing times as well as an inclusion of the relatively expensive coupling agent in order to achieve adequate silica reinforcement for the tread rubber composition, all of which adds an additional expense and cost for the rubber preparation.

Further, such silica reinforcing filler is typically hydrophilic in nature and does not therefore normally readily blend with a diene-based elastomer in tread rubber without an addition of, for example, an organosiloxane or a suitable coupling agent to hydrophobate the silica to promote a more hydrophobic property for the silica to render it more compatible with the tread rubber, all of which adds an additional cost to the rubber compounding ingredients.

Accordingly, it is desired herein to provide alternative means for promoting wet traction for a tire tread which may be used, for example, for a tread which contains rubber reinforcing carbon black as a reinforcing filler.

For this invention, it has been observed that wet skid resistance (wet traction) for a tire tread may be promoted by providing an inclusion of a dispersion of a particulate hydrophilic, water absorbing polymer in the tread rubber composition of which a portion of the polymer is exposed to the running surface of the tire tread. It has been observed that as the polymer on the running surface of the tread contacts water, (which may be, for example, in a form of a wet substrate, which may, in turn, be for example, a wet road surface), it can absorb water and expand to promote a formation of a tread running surface having a degree of wet skid resistance (wet traction).

Contemplated water absorbing polymers are particulate hydrophilic cross-linked polymeric materials that can absorb a significant amount of water when contacted with water without being significantly dissolved in the water itself and become significantly softer in nature. Such contemplated polymers have a capacity, or ability, to absorb water in an amount of at least 1 g/g and, for example, in a range of from 1 to 400, or sometimes higher such as up to 1000, g/g of water (grams of water per gram of polymer). In their water-absorbed softer state, such cross-linked hydrophilic polymer might sometimes be referred to as a hydrogel. Preferably, the contemplated polymers have a capacity to absorb water in an amount of at least 50 g/g, alternately at least 100 g/g, such as in a range of from 100 g/g to 400 g/g or from 200 g/g to 400 g/g.

It has been observed that various physical properties of the rubber compositions containing low levels of a dispersion of such particulate hydrophilic cross-linked polymer were not significantly affected by the presence of the polymer dispersion in its dry state yet, however, various physical properties of the rubber may be dramatically affected by an exposure of the polymer dispersion to water (e.g. on a running surface of a tire tread exposed to a wet road) for which the polymer absorbs water and tends to expand and form a softened hydrogel.

While the mechanism may not be fully understood, it is envisioned herein that absorption of water by a functional group on the polymer or in the polymer chain increases a micro-Brownian motion of chain segments of the polymer chain backbone, resulting an a substantial reduction in the glass transition temperature (Tg) of the water-absorption composition to change it to a softened polymer that could exhibit an increased hysteresis physical property for the associated cured rubber composition when wet, and promoting an increased wet skid resistance for the tire tread rubber.

Representative of various water absorbing hydrogels are, for example cross-linked water-absorbing polymers which are cross-linked through the use of cross-linkers which are organic molecules what contain two or more polymerizable carbon-to-carbon double bonds and may be comprised of, for example, polymerized acrylic acid such as for example, the Luquasorb™ series of superabsorbent polymers from the BASF company as gels (hydrogels) which have an ability to absorb water without being dissolved.

A variety of such water absorbing cross-linked polymers may be obtained as, for example, those described in Modern Superabsorbent Polymer Technology, Wiley-VCH, (1998), Pages 9 through 14, edited by F. L. Buchholz and A. T. Graham and in "Superabsorbent Polymers Science and Technology", American Chemical Society, (1994), ACS Symposium Series 5763, Pages 111 through 127, edited by F. L. Buchholz and N. A. Peppas, and in "Biopolymers, PVA Hydrogels, Anionic Polymerization and Nanocomposites", Springer, (2000), Advances in Polymer Science, Series 153, Pages 37 through 66, chapter by C. M. Hassan and N. A. Peppas.

Representative of such water absorbing cross-linked polymers are those such, as for example, a sodium polyacrylate granular powder as Luquasorb 1010™ from BASF reportedly having a distilled water free swell capacity of 240 g/g, an apparent specific gravity (g/ml) of from 0.6 to 0.7, a Tg of 190°C and an average particle size of less than about 100 microns (µm). By the term "free swell" capacity it is meant the ability for the dry polymer to absorb the water in its free, unrestricted state as compared to the polymer being somewhat restricted from swelling in a sense of being contained as a dispersion within a substrate, usually at a temperature of 23°C.

Other of such water absorbing cross-linked polymers is, for example, an AQUA Keep™ series of cross-linked polyacrylate superabsorbent polymer as a granular powder from Sumitomo Seika Chemical Co. reportedly having a water absorbing capacity (free swell capacity) of up to 1000 g/g.

Further such water absorbing cross-linked polymer are, for example, a CABLOC™ series of cross-linked polyacrylate superabsorbent polymer as a granular powder from Stockhausen, Inc., reportedly having water absorbing capacity (free swell capacity) of up to 400 g/g.

Such water absorbing cross-linked polymers (which may be referred to herein as "superabsorbent polymers", or "SAP") are typically in a form of hard granular particles or in a form of fibers. The fiber form of the superabsorbent polymer may be considered as being advantageous for tire component applications (e.g. tire tread), since a much smaller cross-sectional dimension (e.g. an average of about 30 microns or less in diameter) may usually be obtained.

It is understood that such SAP polymers absorb a significant quantity of water when contacted with water and, as hereinbefore discussed, thereby change to a relatively soft hydrogel, usually a rubbery hydrogel, without being significantly dissolved in the water. Historically, various SAP polymers have been indicated as being useful, for example, for application to infant diapers, surgical sponges, hot and cold packs for sore muscles, artificial snow and soil conditioners. Interestingly, the glass transition temperature (Tg) of the SAP may drop significantly from, for example, from a Tg higher than 190°C to a Tg lower than ambient temperature (e.g. lower than 23°C) depending somewhat upon the nature of the SAP itself and the amount of water absorbed. In practice, as hereinbefore mentioned, such SAP's may have a free swell capacity to adsorb, for example and depending upon the SAP itself of at least 1 g/g and preferably in a range of from 1 g/g to 400 g/g (which may be at least 400 g/g) of water (per gram of SAP), or more, depending, for example, upon the cross-link density and degree of neutralization in the case of an a polyacrylic acid based SAP such as for example, a sodium polyacrylate SAP. In practice, therefore, and has hereinbefore discussed, it is envisioned the water absorbing polymer softens because of an increased mobility of the polymer chain segments from the absorption of water by hydrophilic groups on the main chains of the polymer.

It is envisioned herein that such a dramatic reduction of the Tg of the water absorbed SAP promotes a significant impact upon wet traction of a tire tread rubber composition, as well as dry traction of the tread rubber before water absorption by the SAP contained in the tread rubber composition.

In a further practice of the invention, it is recognized that various traction enhancing resins may used to aid in promoting wet traction for the tread rubber composition. For example, various hydrocarbon-derived synthetic resins, coumarone-indene resins, rosin, rosin derivatives and dicyclopentadiene based resins such as, for example, dicyclopentadiene/diene resins have heretofore been used to enhance traction of various tire tread rubber compositions.

Such resins may typically have softening points (Ring and Ball), in a range of from 20°C to 110°C and even up to 170°C, although few of such resins normally used in rubber tire tread rubber composition for traction enhancing purposes have a softening point higher than 110°C.

However this use of the aforesaid water absorbing polymer has been observed to act very differently from such resins heretofore used to enhance tread traction, particularly in a sense of substantially resisting a reduction in the hysteresis of the cured tread rubber composition by substantially resisting an increase in its rebound (100°C) property.

In another aspect of tire tread rubber considerations, it should be pointed out that viscoelastic properties of a rubber, or a rubber blend, for tire tread applications, are important. For example, a tangent delta viscoelastic property is the ratio of the viscous contribution to the elastic contribution for a viscoelastic rubber article subjected to a cyclic deformation. The term "tangent delta" is often referred to herein as "tan delta". Its characterization of viscoelastic properties of rubber is well known to those skilled in such art. Such property is typically represented in the form of a curve as a temperature sweep plot of tangent delta values on a y, or vertical, axis versus temperature on an x, or horizontal, axis.

For this invention, it was unexpectedly observed that the tread rubber composition which contained the water absorbing polymer substantially maintained its tan delta characteristic at an elevated internal temperature of the tire tread rubber composition (e.g. above 30°C).

In the description of this invention, rubber compound, sulfur-cured rubber compound, rubber composition, rubber blend and compounded rubber terms are used somewhat interchangeably to refer to rubber which has been mixed with rubber compounding ingredients. Terms "rubber" and "elastomer" may be used interchangeably unless otherwise indicated. The term "phr" refers to parts by weight of an ingredient per 100 parts by weight of rubber in a rubber composition. Such terms are well known to those having skill in such art.

The term "Tg" refers to a middle point glass transition of a polymer, or rubber, as determined by differential scanning calorimetry (DSC) at a heating rate of 10°C per minute, a procedure which is well known to those having skill in such art. The superabsorbent polymer (SAP) is dried prior to the DSC measurement to avoid the impact of absorbed moisture on the polymer's Tg.

### Detailed Description of the Invention

In accordance with this invention, a rubber composition according to claim 1 is provided.

In a preferred embodiment of the invention at least a portion of said particulate water absorbing polymer is present at the surface of said rubber composition. While the particulate water absorbing polymer is present as a dispersion within and throughout the rubber composition, it is considered that at least a portion of the particles are at or near the surface of the rubber composition.

In further accordance with this invention, a pneumatic tire is provided with an outer circumferential tread having a running surface, i.e. a surface intended to be ground-contacting, according to claim 3.

Preferably, at least a portion of said particulate water absorbing polymer is present at said running surface of said tread. While the particulate water absorbing polymer is present as a dispersion within and throughout the rubber composition, it is considered that at least a portion of the particles are at or near the running surface of tire tread in a manner that such particles may become readily exposed upon a wearing away of a portion of the tread running surface and in a manner that such particles, when expanded by absorption of water, can cause the surface modification of the running surface of the tread to enhance the tread traction.

In one embodiment, said particulate water absorbing polymer may have a dry Tg (Tg of the polymer in its dry state) in a range of 150°C to 200°C and, upon absorbing water, e.g. for example, from 15 to 40 percent of its weight of water, a wet Tg (Tg of the polymer in such water-absorbed, wet state) in a range of from 20°C to 50°C, wherein said dry Tg and said wet Tg are spaced apart by at least 100°C.

In a preferred embodiment, the particulate water absorbing polymer is in a form of at least one of granules, irregularly shaped particles, and fibers (wherein such fibers are considered herein to be an elongated form of the particulate water absorbing polymer).

In practice, such granules may have an average diameter of, for example, in a range of from 1 to 300 microns, alternately 10 to 300 microns.

In practice, such fibers may have an average diameter, for example, in a range of from 10 to 50 microns and/or an average length, for example, in a range of from 100 to 1000 microns. The fibers may have an aspect ratio (average length to average diameter), for example, in a range of from 10 to 100.

In another embodiment, said rubber composition of said tread contains a dispersion of from 30 to 120 phr of reinforcing filler comprising:
(A) rubber reinforcing carbon black, e.g. from 30 to 120 phr of rubber reinforcing carbon black, or
(B) precipitated silica (such as rubber reinforcing synthetic amorphous precipitated silica), e.g. from 30 to 120 phr of precipitated silica, or
(C) a combination of rubber reinforcing carbon black and precipitated silica, comprising, for example, up to 50 weight percent of precipitated silica;
wherein said precipitated silica contains hydroxyl groups (e.g. silanol groups) in its surface;
wherein said precipitated silica is used in combination with a coupling agent for said precipitated silica having a moiety reactive with said hydroxyl groups on said precipitated silica and another different moiety interactive with said conjugated diene-based elastomer(s).

In one embodiment, representative of such water absorbing polymers are polymers comprising, for example:
(A) neutralized cross-linked polyacrylic acid polymer having a water absorbing ability (capacity) of absorbing water in a range of at least about 1 g/g (grams of water per gram of cross-linked polyacrylic acid) of water and being insoluble in water;
(B) cross-linked polyvinyl alcohol (PVA) polymer having a water absorbing ability (capacity) of at least 1 g/g and being insoluble in water, and
(C) cross-linked polyacrylamide polymer having a water absorbing ability (capacity) of at least 1 g/g and being insoluble in water.

In practice, said polyacrylic acid polymer is in a neutralized form in a sense that its carboxylic acid groups are at least partially reacted with a base (to substantially neutralize the carboxylic acid groups) which is understood to increase ionization of a resultant gel and to thereby promote an increase in the water absorbing capacity of the polymer

In practice, said neutralized polyacrylic acid polymer is cross-linked in a sense of reacting the neutralized polyacrylic acid polymer with, for example, a tri- or tetra- functional compound which contains carbon-to-carbon double bonds. Representative of such compounds are, for example, tetrallylethoxy ethane and 1,1,1-trimethylolpropanetricrylate, long as said cross-linked polyacrylic acid polymer has said water absorbing ability (capacity) of at least 1 g/g and is relatively insoluble in water.

In practice, said polyvinyl alcohol (PVA) polymer is cross-linked in a sense of reacting the PVA with an aldehyde (e.g. glutaraldehde, acetaldehyde and formaldehyde), so long as said cross-linked PVA has a water absorbing ability (capacity) of at least 1 g/g water and is insoluble in water.

In practice, said cross-linked polyacrylamide polymer may be cross-linked with a suitable cross-linking agent, (e.g. chromium acetate, N,N'methylenebisacrylamide and tetramethylethylene), so long as said cross-linked polyacrylamide has a water absorbing ability (capacity) of at least 1 g/g and is insoluble in water.

Cross-linking of such polyacrylic acid polymer, polyvinyl alcohil polymer and polyacrylamide polymer may also be accomplished to radiation in a sense of forming cross-linking points in the polymer through absorption of radiation energy as would be understood by one having skill in such art.

By the term "insoluble in water" it is meant that the polymer becomes swollen in water rather than being completely dissolved by water to form a water solution.

If desired, an inclusion of one or more traction enhancing resins may also be included in said rubber composition of said tread (in combination with said water absorbing polymer) in an amount of, for example, from 2 to 12 phr of such resin, although the aforesaid beneficial maintenance of the tread rubber composition's hysteresis with the aforesaid inclusion of the cross-linked water absorbing polymer and tan delta properties of the rubber composition may not be fully maintained.

Representative examples of such additional traction enhancing resins are resins having various soften points in a range from 20°C to 150°C such as, resins comprising or selected from, for example, at least one of petroleum hydrocarbon resins, coumarone-indene resins, alkylated petroleum hydrocarbon resins, aromatic hydrocarbon resins, dicyclopentadiene/diene resins, and rosin and rosin derivatives, particularly resins of the coumarone-indene type, dicyclopentadiene/diene type, and aromatic petroleum resins.

For example, a representative coumarone-indene resin having a softening point in a range of 20°C to 40°C is a resin such as Cumar R-29 from Neville Chemical Co. Coumarone-indene resins are a class of resins recognized by those having skill in such resin art. They are typically derived from the polymerization of coumarone and indene.

For example, a representative alkylated petroleum hydrocarbon resin having a softening point in a range of from 120°C to 150°C, primarily a saturated alkylated resins is, for example, Nevchem 150 by Neville Chemical Co. Such resins might be prepared, for example, by the alkylation of aromatic hydrocarbons with dicyclopentadiene (see US-B- 3,023,200).

For example, a representative aromatic petroleum hydrocarbon resin having a softening point in a range of 90°C to 110°C is a resin such as LX-782 by Neville. In one aspect, such resins contain carbon-to-carbon unsaturation (double bonds) and may conventionally be a mixture of aromatic and acyclic polymer moieties, although they may be referred to as 'aromatic petroleum resins". The aromatic component of the resin is preferably selected from styrene, alpha-methylstyrene or t-butyl styrene and the remaining component of the resin is an aliphatic hydrocarbon. Such classes of resins are believed to be recognized as such by those having a skill in such resin art.

For example, a dicyclopentadiene/diene resin composition is contemplated as the reaction product of the polymerization reaction between dicyclopentadiene and at least one olefin hydrocarbon (a diene) copolymerizable therewith which has 4 to 12 carbon atoms and which is selected from monoolefins and diolefins. While various diolefins are contemplated, including limonene and cyclooctadiene, cyclooctadiene is preferred. Preferably, such dicyclopentadiene-olefin copolymer comprises 50 to 80 weight percent dicyclopentadiene. Such resin may have, for example, a softening point in a range of 20°C to 150°C or higher. Such a dicyclopentadiene/cyclooctadiene copolymer resin composed of, for example, from 50 to 80 weight dicyclopentadiene. Representative of such various dicyclopentadiene/ diene resins are shown in US-B- 3,927,144.

Such additional resins may be present in the tire tread rubber composition in an amount in a range of, for example, 2 to 12 phr.

Representative of various conjugated diene-based elastomers for the tire tread rubber composition of this invention are polymers of at least one of isoprene and 1,3-butadiene and copolymers of styrene and at least one of isoprene and 1,3-butadiene.

Such conjugated diene based elastomers may be comprised of, for example, cis 1,4-polyisoprene (natural and synthetic), cis 1,4-polybutadiene rubber, styrene/butadiene copolymer rubber, isoprene/butadiene rubber, styrene/isoprene/butadiene terpolymer rubber, high vinyl polybutadiene rubber having a vinyl 1,2- content in a range of from about 35 percent to about 90 percent.

It should readily be understood by one having skill in the art that said tread portion of the pneumatic tire, as well as the rubber or other material in the basic carcass, which normally contains reinforcing elements in the tread region, can be compounded by methods generally known in the rubber compounding art, such as mixing the various sulfur-vulcanizable constituent rubbers with various commonly-used additive materials such as, for example, curing aids, such as sulfur, activators, retarders and accelerators, processing additives, such as oils, resins including tackifying resins, silicas, and plasticizers, fillers, pigments, stearic acid, zinc oxide, waxes, antioxidants and antiozonants, peptizing agents and reinforcing materials such as, for example, carbon black. As known to those skilled in the art, depending on the intended use of the sulfur-vulcanizable and sulfur-vulcanized materials (rubbers), the certain additives mentioned above are selected and commonly used in conventional amounts.

Such pneumatic tires conventionally comprise a generally toroidal-shaped carcass with an outer circumferential tread, adapted to be ground contacting, spaced beads and sidewalls extending radially from and connecting said tread to said beads.

For high performance applications, typical additions of carbon black may comprise, for example, from 40 to 140 parts by weight of diene rubber (phr), often 70 to 100 phr. Typical amounts of tackifier resins, if used, may comprise, for example, 0.5 to 12. Typical amounts of silica, if used, comprise 10 to 20 phr and the amounts of silica coupling agent, if used, comprises 0.05 to 0.25 parts per part of silica, by weight. Representative silicas may be, for example, hydrated amorphous silicas. A representative coupling agent may be, for example, a bifunctional sulfur-containing organo silane such as, for example, bis-(3-triethoxy-silylpropyl) tetrasulfide, bis-(3-trimethoxy-silylpropyl) tetrasulfide and bis-(3-trimethoxy-silylpropyl) tetrasulfide grafted silica from Degussa AG. Typical amounts of antioxidants comprise 1 to 5 phr. Representative antioxidants may be, for example, diphenyl-p-phenylenediamine and others, such as those disclosed in The Vanderbilt Rubber Handbook (1978), Pages 344 through 346. Suitable antiozonant(s) and waxes, particularly microcrystalline waxes, may be of the type shown in The Vanderbilt Rubber Handbook (1978), Pages 346 and 347. Typical amounts of antiozonants comprise 1 to 5 phr. Typical amounts of stearic acid comprise 1 to 3 phr. Typical amounts of zinc oxide comprise 1 to 5 phr. Typical amounts of waxes comprise 1 to about 5 phr. Typical amounts of peptizers comprise 0.1 to 1 phr.

The vulcanization is conducted in the presence of a sulfur-vulcanizing agent. Examples of suitable sulfur-vulcanizing agents include elemental sulfur (free sulfur) or sulfur-donating vulcanizing agents, for example, an amine disulfide, polymeric polysulfide or sulfur olefin adducts. Preferably, the sulfur-vulcanizing agent is elemental sulfur. As known to those skilled in the art, sulfur-vulcanizing agents are used in an amount ranging from 0.5 to 8 phr.

Accelerators are used to control the time and/or temperature required for vulcanization and to improve the properties of the vulcanizate. In one embodiment, a single accelerator system may be used, i.e., primary accelerator. The primary accelerator is used in amounts ranging from 0.5 to 2.0 phr. Preferably, the primary accelerator is a sulfenamide. If a second accelerator is used, the secondary accelerator is preferably a guanidine, dithiocarbamate or thiuram compound.

The tire can be built, shaped, molded and cured by various methods which will be readily apparent to those having skill in the art.

Such unvulcanized tread rubber composition (e.g. in a form of an extruded rubber strip) can be applied in the building of the green (unvulcanized) rubber tire in which the uncured, shaped tread is built onto the carcass following which the green tire is shaped and cured.

Alternately, an unvulcanized, or partially vulcanized, tread rubber strip can be applied to a cured tire carcass from which the previous tread has been buffed or abraded away and the tread cured thereon as a retread.

The practice of this invention is further illustrated by reference to the following examples. Unless otherwise indicated, all parts and percentages are by weight.

### Example I

Rubber compositions were prepared for evaluating an effect of an inclusion of a dispersion of small amount of cross-linked, water absorbing polymer granules (SAP) in a carbon black-reinforced, conjugated diene-based elastomer-containing rubber composition.

Samples CE1, CE2 and CE3 are comparative rubber samples which contained various amounts of rubber reinforcing carbon black without silica reinforcing filler and without an inclusion of the SAP.

Samples E1, E2 and E3 are experimental samples which contained rubber reinforcing carbon black without silica reinforcing filler and contained various amounts of an SAP dispersion.

Comparative rubber Sample CE2 and Experimental rubber Samples E1, E2 and E3 (containing the water absorbing granule dispersion) were comparatively similar in a sense that each contained 50 phr of rubber reinforcing carbon black.

The rubber compositions were prepared by mixing the ingredients in sequential mixing steps in one or more internal rubber mixers.

The basic recipe for the rubber Samples is presented in the following Table 1 and recited in parts by weight unless otherwise indicated.

**Table 1**

| **Non-Productive Mixing Step (NP), (mixed to 170°C)** | Parts |
|---|---|
| Cis 1,4-polybutadiene rubber¹ | 20 |
| Styrene/Butadiene rubber² | 80 |
| Carbon black (N299)³ | variable |
| Superabsorbent polymer (SAP)⁴ | variable |
| Zinc oxide | 3.5 |
| Processing oil⁵ | 10 |
| Stearic acid⁶ | 2 |
| Antioxidant⁷ | 0.75 |

| **Productive Mixing Step (PR), (mixed to 110°C)** | |
|---|---|
| Sulfur | 1.5 |
| Sulfenamide and tetramethylthiuram disulfide cure accelerators | 1.3 |

| | |
|---|---|
| ¹As Budene 1207™ from The Goodyear Tire & Rubber Company ²Solution polymerization prepared styrene/butadiene rubber as SLF16Sn42™ from The Goodyear Tire & Rubber Company having a bound styrene content of about 16 percent ³Rubber reinforcing carbon black as N299, an ASTM designation ⁴Water absorbing resin granules as Liquasorb 1010™ from the BASF company, a cross-linked sodium polyacrylate resin reportedly having an ability to absorb up to 240 g/g distilled water at a temperature of about 23°C and having an average particle size smaller than 100 microns ⁵Rubber processing oil ⁶Fatty acid comprised (composed) of at least 90 weight percent stearic acid and a minor amount of other fatty acid comprised (composed) primarily of palmitic and oleic acids. ⁷Antidegradant of the diamine type | |

The following Table 2 illustrates cure behavior and various physical properties of rubber compositions based upon the basic recipe of Table 1.

**Table 2**

| | Comparative Samples | | | Experimental Samples | | |
|---|---|---|---|---|---|---|
| | CE1 | CE2 | CE3 | E1 | E2 | E3 |
| Carbon black phr | 40 | 50 | 60 | 50 | 50 | 50 |
| Water absorbing polymer (SAP) phr | 0 | 0 | 0 | 5 | 10 | 20 |
| Water absorbing capability of cured thin rubber shee (% weight gain)¹ | ND² | 0 | ND | ND | 2.2 | 16.2 |

| **Stress-strain, ATS, 14 min, 160°C³** | | | | | | |
|---|---|---|---|---|---|---|
| 100% modulus (MPa) | 1.6 | 2 | 2.8 | 2 | 2 | 2.1 |
| 300% modulus (MPa) | 8.02 | 11.2 | 14.5 | 10.7 | 10.5 | 10.2 |
| Tensile strength (MPa) | 13.8 | 17.6 | 17.7 | 16 | 14.8 | 13.2 |
| Elongation at break (%) | 444 | 437 | 379 | 418 | 403 | 384 |

| **Shore A Hardness** | | | | | | |
|---|---|---|---|---|---|---|
| 23°C | 59 | 66 | 72 | 65 | 67 | 69 |
| 100°C | 56 | 61 | 66 | 61 | 62 | 64 |

| **Rebound** | | | | | | |
|---|---|---|---|---|---|---|
| 23°C | 51 | 45 | 40 | 46 | 45 | 44 |
| 100°C | 66 | 61 | 57 | 61 | 61 | 61 |

| **RDS Strain sweep, RPA, 10 Hz, 30°C⁴** | | | | | | |
|---|---|---|---|---|---|---|
| Modulus G', at 0.1% strain (MPa) | 2.7 | 5.6 | 10.2 | 5.6 | 6 | 6.4 |
| Modulus G', at 50% strain (MPa) | 1.2 | 1.5 | 2 | 1.5 | 1.6 | 1.7 |
| Tan delta at 5% strain | 0.17 | 0.23 | 0.27 | 0.23 | 0.22 | 0.22 |
| Wet skid resistance⁵ on asphalt road surface (%) compared to Comparative Sample CE2 having been normalized to 100% | 98 | 100 | 111 | 103 | 107 | 112 |

| | | | | | | |
|---|---|---|---|---|---|---|
| ¹Data obtained from the measurement of weight percentage gain of a very thin cured rubber sheet (1 inch wide by 1 inch long by 1/8 inch thick, or 2.54 cm wide by 2.54 cm long by 0.32 cm thick) immersed in de-ionized water at 23°C for 60 seconds. ²Measurement not determined (ND) ³Data according to Automated Testing System instrument by the Instron Corporation which incorporates six tests in one system. Such instrument may determine ultimate tensile, ultimate elongation, modulii, etc. Data reported in the Table is generated by running the ring tensile test station which is an Instron 4201 load frame. ⁴Data according to Rubber Process Analyzer as RPA 2000™ instrument by Alpha Technologies, formerly the Flexsys Company and formerly the Monsanto Company. References to an RPA-2000 instrument may be found in the following publications: H.A. Palowski, et al, Rubber World, June 1992 and January 1997, as well as Rubber & Plastics News, April 26 and May 10, 1993. ⁵Data according to ASTM E303 using a British Portable Skid Tester (BPST). Reference to the BPST may be found in G. B. Ouyang et al, paper presented at a meeting of the Rubber Division of the American Chemical Society, Denver, Colorado, May 1 through 20, 1993; and Guistino et al paper presented at a meeting of the Rubber Division of the American Chemical Society, Toronto, Ontario, May 10 through 12, 1983. The surface of the BPST test block was in contact with a wet towel for about one minute at about 23°C prior to the test to ensure that the sample testing surface was wet. The wet skid resistance of the rubber composition is reported as relative values (%) to Comparative rubber Sample CE2 normalized to a value of 100. | | | | | | |

It can be seen from Table 2 that the addition of 5, 10 and 20 phr of the superabsorbent polymer resulted in some increase in the Experimental rubber Samples E1, E2 and E3 Shore A hardnesses relative to Comparative rubber Sample CE2, all of which contained 50 phr of rubber reinforcing carbon black.

This is considered herein to be significant in the sense of indicating a potential enhancement of dry handling of a tire having a tread of such rubber composition.

It can further be seen from Table 2 that the addition of 5, 10 and 20 phr of the superabsorbent polymer led to an increased wet skid resistance of Experimental rubber Samples E1, E2 and E3 relative to Comparative rubber Sample CE2.

This is considered herein to be significant in the sense of indicating a potential enhancement of wet traction of a tire tread of such rubber composition.

## Claims

1. A rubber composition comprising at least one elastomer and a dispersion in the rubber composition of at least one particulate water absorbing polymer; wherein said particulate water absorbing polymer has a capability of absorbing water in an amount of at least 1 g/g, alternately in a range of from 1 g/g to 400 g/g.

2. The rubber composition of claim 1 wherein said particulate water absorbing polymer comprises at least one of a neutralized cross-linked polyacrylic acid polymer having a water absorbing capacity of at least 1 g/g and being insoluble in water, a cross-linked polyvinyl alcohol (PVA) polymer having a water absorbing capacity of at least 1 g/g and being insoluble in water, and a cross-linked polyacrylamide polymer having a water absorbing capacity of at least 1 g/g and being insoluble in water.

3. A pneumatic tire with an outer circumferential tread having a running surface said tread being of a rubber composition comprising, based on parts by weight per100 parts by weight rubber (phr):
(A) 100 phr of at least one conjugated diene-based elastomer;
(B) a dispersion in said rubber composition of from 2 to 20 phr, alternately from 2 to 15 phr, of at least one particulate water absorbing polymer;
wherein said particulate water absorbing polymer has a capability of absorbing water in an amount of at least 1 g/g, alternately in a range of from 1 g/g to 400 g/g, and
wherein preferably at least a portion of said particulate water absorbing polymer is present at said tread running surface.

4. The tire of claim 3 wherein said particulate water absorbing polymer is in a form of at least one of granules, irregularly shaped particles, and fibers.

5. The tire of claim 3 or 4 wherein said rubber composition of said tread contains a dispersion of from 30 to 120 phr of reinforcing filler comprising:
(A) rubber reinforcing carbon black, or
(B) precipitated silica, or
(C) a combination of rubber reinforcing carbon black and precipitated silica;
wherein said precipitated silica is used in combination with a coupling agent for said precipitated silica having a moiety reactive with said hydroxyl groups on said precipitated silica and another different moiety interactive with said conjugated diene-based elastomer(s).

6. The tire of at least one of the claims 3-5 wherein said particulate water absorbing polymer comprises at least one of a neutralized cross-linked polyacrylic acid polymer having a water absorbing capacity of at least 1 g/g and being insoluble in water, a cross-linked polyvinyl alcohol (PVA) polymer having a water absorbing capacity of at least 1 g/g and being insoluble in water, and a cross-linked polyacrylamide polymer having a water absorbing capacity of at least 1 g/g and being insoluble in water.

7. The tire of at least one of the claims 3-6 wherein said rubber composition of said tread contains an inclusion of from 2 to 12 phr of at least one traction enhancing resin.

8. The tire of claim 7 wherein said traction enhancing resin has a softening point in a range of 20°C to 150°C and is selected from at least one of petroleum hydrocarbon resins, coumarone-indene resins, alkylated petroleum hydrocarbon resins, aromatic hydrocarbon resins, dicyclopentadiene/diene resins, and rosin and rosin derivatives.

9. The tire of claim 8 wherein said resin is selected from at least one of the group selected from coumarone-indene, dicyclopentadiene/diene, and aromatic petroleum resins.

10. The tire of at least one of the preceding claims 3-9 wherein said particulate water absorbing polymer has a dry Tg in a range of 150°C to 200°C and, upon absorbing water, a wet Tg in a range of from 20°C to 50°C, wherein said dry Tg and said wet Tg are spaced apart by at least 100°C.
